# EUROPÄISCHE PATENTANMELDUNG

(11) **EP 3 967 667 A1**
(43) Veröffentlichungstag der Anmeldung: **16.03.2022**
(21) Anmeldenummer: 21192492.3
(22) Anmeldetag: 23.08.2021
(51) Int. Cl.: C03B 33/02, B23K 26/53, C03B 33/033

(54) **VERFAHREN UND VORRICHTUNG ZUM ZUSCHNEIDEN VON GLASFOLIEN**

(30) Priorität: 15.09.2020 DE 102020123928
(71) Anmelder: SCHOTT AG, 55122 Mainz (DE)
(72) Erfinder: WASCHBÜSCH, Michael, 55278 Undenheim (DE); PLAPPER, Volker, 55232 Alzey (DE); KUREK, Klaus-Peter, 55129 Mainz (DE); ENGELHARDT, Ulrich, 30173 Hannover (DE)
(74) Vertreter: Blumbach · Zinngrebe Patentanwälte PartG mbB

(57) **Zusammenfassung**

Der Erfindung liegt die Aufgabe zugrunde, das Auftrennen auch von dünnen Gläsern verlässlich in einem stabilen Prozess zu ermöglichen. Dazu ist ein Verfahren vorgesehen, bei welchem
- eine Glasfolie (1) mit einer Dicke von höchstens 300 µm bereitgestellt, und
- die Glasfolie (1) mit einem gepulsten Laserstrahl (5) eines Ultrakurzpulslasers (3) bestrahlt wird, wobei - die Lichtintensität des Laserstrahls (5) im Inneren der Glasfolie (1) so groß ist, dass der Laserstrahl (5) entlang seines Weges durch die Glasfolie (1) eine filamentförmige Schädigung (9) hinterlässt, und wobei
- der Laserstrahl (5) und die Glasfolie (1) relativ zueinander bewegt werden, so dass durch die Pulse des Laserstrahls (5) nebeneinander entlang eines auf der Glasfolie (1) verlaufenden Pfades (11) filamentförmige Schädigungen (9) eingefügt werden, und wobei
- während des Einfügens der filamentförmigen Schädigungen (9) eine Zugspannung zumindest auf eine Oberfläche der Glasfolie (1) ausgeübt wird, welche auf das Glas an den filamentförmigen Schädigungen (9) und bevorzugt in Richtung quer zum Pfad (11) der nebeneinanderliegenden filamentförmigen Schädigungen (9) wirkt, so dass
- die Glasfolie (1) sich während des Einfügens der filamentförmigen Schädigungen (9) entlang des Pfades (11) auftrennt.

## Beschreibung

Diese Anmeldung ist eine Nachanmeldung der deutschen Anmeldung mit dem Aktenzeichen 10 2020 123 928.9, welche hiermit in ihrer Gesamtheit durch Referenz vollumfänglich inkorporiert wird. Die Anmelderin behält sich insbesondere vor, auf die Offenbarung der 10 2020 123 928.9 in dieser Anmeldung zurückzugreifen und/oder darauf basierend Gegenstände zu beanspruchen.

Die Erfindung betrifft allgemein den Zuschnitt von dünnen Gläsern. Insbesondere betrifft die Erfindung ein Verfahren und eine Vorrichtung zum Zuschnitt von Gläsern mit Laserbestrahlung.

Separieren von dünnem Glas erfolgt standardmäßig mit klassischen Ritzbrech-Prozessen. Diese Prozesse sind mindestens zweistufig. Erst wird mit einem Ritzwerkzeug, wie etwa einem Ritzrad oder einem Ritzdiamanten, eine oberflächliche Schädigung eingefügt und anschließend durch mechanisches Biegen oder Einbringen thermomechanischer Spannungen, etwa mittels eines CO₂-Lasers die Glasscheibe entlang der oberflächlichen Schädigung aufgetrennt.

Ein Schneideverfahren, bei welcher ein Anriss mittels eines Diamanten oder eines ähnlich geformten Ritzwerkzeugs eingefügt wird, ist aus der DE 10 2018 131 179 A1 bekannt. Mit dem Verfahren lassen sich sehr feste Kanten erzeugen. Andererseits sind Diamanten als Ritzwerkzeuge sehr empfindlich und können besonders beim Aufsetzen auf das Glas beschädigt werden.

Laserinduziertes Spannungsrisstrennen ist beispielsweise bekannt aus der US 2013/0126576 A1, der WO 2011/026074 A1 und der US 6,327,875 B1. Diese Verfahren erweisen sich im Allgemeinen als instabil bei dünnen Gläsern, da es schwierig ist, hier einen hinreichend großen Temperaturgradienten zwischen Ober- und Unterseite des Glases aufzubauen. Weiterhin führen schon kleinste Temperaturgradienten zu instabilen dreidimensionalen Verwerfungen ("Buckeln"). Die WO 2016/156235 A1 schlägt ein asymmetrisches Strahlprofil vor, um einen steileren Temperaturgradienten zu erhalten. Ebenso sieht die WO 2016/156234 A ein besonderes Strahlprofil vor, bei welchem zwei Teilbereiche des Einwirkfelds des Lasers lateral beabstandet zur Trennlinie sind, und im Einwirkfeld einen Ausschnitt einrahmen, durch welchen die Trennlinie läuft, derart, dass im Abschnitt dieser Beabstandung Bereiche des Dünnglases neben der Trennlinie stärker erwärmt werden, als Bereiche auf der Trennlinie.

Aus der DE 10 2017 100 015 A1 ist weiterhin ein Verfahren zum Trennen eines Glassubstrats bekannt, bei dem entlang einer vorbestimmten Trennlinie mit einem gepulsten Laserstrahl voneinander beabstandet Schädigungen in das Substrat eingebracht werden, wobei sowohl der mittlere Abstand zwischen benachbarten Schädigungen als auch die Anzahl der Laserpulse zur Erzeugung jeweils einer Schädigung derart gewählt werden, dass die Bruchspannung zum Trennen des Substrats kleiner ist als eine Referenzspannung und die Kantenfestigkeit der nach dem Trennen erhaltenen Trennkante größer ist als eine von dem jeweiligen Substrat abhängige zweite Referenzspannung. Das Substrat ist nach dem Einbringen der Schädigungen durch Einwirkung einer Spannung entlang der Trennlinie trennbar. Insbesondere bei dünnen Substraten besteht jedoch das Problem, dass ein durch die Perforation bereits in seiner Festigkeit geschwächtes Glassubstrat beim Handling (z.B. Transport) undefiniert vereinzeln kann. Dadurch kann das Auftrennen unkontrolliert in Bezug auf den Kantenverlauf und daraus in Folge möglicherweise auch mit verringerter Festigkeit der Kante erfolgen. Ursächlich dafür ist, dass dünnes Glas durch seine geringe Eigensteifigkeit unter den Kräften des Handlings zu Deformation neigt und dadurch unbeabsichtigt höhere Zugspannungen eingebracht werden können als für das Trennen erforderlich. Insbesondere wenn diese Spannungen nicht entlang der vorpräparierten Linie wirken, sondern in einem Winkel dazu abweichen, kann es zu unkontrolliertem Bruch oder verringerter Kantenfestigkeit kommen.

Der Erfindung liegt daher die Aufgabe zugrunde, das Auftrennen auch von dünnen Gläsern verlässlich in einem stabilen Prozess zu ermöglichen. Diese Aufgabe wird durch den Gegenstand der unabhängigen Ansprüche gelöst. Vorteilhafte Ausführungsformen sind in den jeweiligen abhängigen Ansprüchen angegeben. Demnach ist ein Verfahren zum Auftrennen von Glasfolien vorgesehen, bei welchem
- eine Glasfolie mit einer Dicke von höchstens 300 µm bereitgestellt, und
- die Glasfolie mit einem gepulsten Laserstrahl eines Ultrakurzpulslasers bestrahlt wird, wobei
- die Lichtintensität des Laserstrahls im Inneren der Glasfolie so groß ist, dass der Laserstrahl entlang seines Weges durch die Glasfolie eine filamentförmige Schädigung hinterlässt, und wobei
- der Laserstrahl und die Glasfolie relativ zueinander bewegt werden, so dass durch die Pulse des Laserstrahls nebeneinander entlang eines auf der Glasfolie verlaufenden Pfades filamentförmige Schädigungen eingefügt werden, und wobei
- während des Einfügens der filamentförmigen Schädigungen eine Zugspannung zumindest auf eine Oberfläche der Glasfolie ausgeübt wird, welche auf das Glas an den filamentförmigen Schädigungen und bevorzugt in Richtung quer, vorzugsweise senkrecht, beziehungsweise orthogonal zum Pfad der nebeneinanderliegenden filamentförmigen Schädigungen wirkt, so dass
- die Glasfolie sich während des Einfügens der filamentförmigen Schädigungen entlang des Pfades auftrennt.

Bevorzugt beträgt die Dicke der Glasfolie höchstens 200 µm, weiter bevorzugt höchstens 100 µm. Insbesondere ist die Erfindung auch auf sehr dünne Glasfolien mit einer Dicke von 50 µm oder weniger, insbesondere höchstens 35 µm anwendbar. In einem Ausführungsbeispiel wird eine Glasfolie mit einer Dicke von 30 µm bearbeitet.

Als Glasfolie wird eine sehr dünne Glasscheibe verstanden, die aufgrund ihrer geringen Dicke eine geringe Eigensteifigkeit aufweist.

Es ist bevorzugt, wenn der Laserstrahl eine Wellenlänge aufweist, für die das Glas der Glasfolie transparent ist, so dass der Laserstrahl die Glasfolie durchleuchten kann.

Weiterhin kann der Laserstrahl mit einer Fokussierungsoptik fokussiert werden. Hier kann besonders durch die Fokussierung die Lichtintensität des Laserstrahls im Inneren der Glasfolie so groß werden, dass der Laserstrahl entlang seines Weges durch die Glasfolie eine filamentförmige Schädigung hinterlässt.

Das Anlegen der Zugspannung während des Einfügens der filamentförmigen Schädigungen kann ein Anlegen der Zugspannung gleichzeitig zum Vorgang des Einfügens eines Filaments sein. Allgemein kann das Anlegen der Zugspannung aber in einem mit dem Zeitraum des Einfügens der Vielzahl von Filamenten überlappenden Zeitraum erfolgen, so dass das Einfügen der Filamente und das Anlegen der Zugspannung während dieses zeitlichen Überlapps gleichzeitig erfolgt.

Die filamentförmigen Schädigungen werden im Folgenden der Einfachheit halber auch einfach als Filamente bezeichnet. Die filamentförmige Schädigung kann sich als durchgehender dünner, offener Kanal darstellen. Ebenso kann aber auch nur eine filamentförmige, beziehungsweise linienförmige Materialveränderung vorliegen. Auch sind Mischformen möglich, bei denen sich entlang einer Linie Kavitäten oder Materialveränderungen erstrecken. Eine Form sind beispielsweise entlang einer Linie kettenförmig aufgereihte kurze Schädigungen, die durch periodische Selbstfokussierung eines intensiven Laserstrahls entstehen.

Überraschenderweise konnte festgestellt werden, dass zeitlich direkt aufeinander folgend die Prozesse des Perforierens beziehungsweise Vorschädigens mit den Pulsen eines Ultrakurzpulslasers und des Vereinzelns durchgeführt und somit in einem Prozessschritt definiert kombiniert werden können. Dabei wird die Perforation am Glas durchgeführt, während das Glas der Glasfolie unter definierter Zugspannung gebracht wird. Unter Kombination der Perforation und der damit erreichten Vorschwächung mit der Zugspannung kann unmittelbar in einer Aufspannung das Substrat definiert geschwächt und direkt vereinzelt werden. Damit kann in einem Schritt die gewohnte und erforderliche Kantenqualität aus etablierten Trennprozessen mit Ultrakurzpulslasern erreicht werden.

Der Riss springt insbesondere unter dem Einfluss der Zugspannung von einem Filament zum nächsten, typischerweise sobald ein neues Filament eingefügt wurde. Damit ist nicht nur die übliche Zweistufigkeit des Auftrennens mit Ritzen und anschließendem Brechen aufgelöst. Weil der Riss sich sukzessive von Filament zu Filament bewegt, wird auch vermieden, dass der Riss die Reihe der Filamente, soweit diese bereits eingefügt wurden, überholt und unkontrolliert weiterläuft. Damit kann eine gute Kontrolle des Verlaufs des Risses erreicht werden.

Eine besonders gute Kontrolle der Rißfortpflanzung wird erreicht, wenn die Glasfolie zur Erzeugung einer quer zum Pfad gerichteten Zugspannung gebogen wird. Dazu kann die Glasfolie auf einer Unterlage mit einem Vorsprung aufgelegt werden, so dass sich die Glasfolie über dem Vorsprung biegt. Der Vorsprung ist bevorzugt langgestreckt, wobei der Pfad der aneinandergereihten Filamente entlang der Längsrichtung des Vorsprungs verläuft.

Das Auftrennen der Glasfolie kann insbesondere auch zur Konfektionierung von Glaselementen mit gewünschten Maßen dienen. Dabei kann eine Vorverarbeitung durch Abtrennen der Glasfolien von einem Glasband erfolgen. Die beim Abtrennen vom Glasband erzeugen Trennkanten müssen dann nicht von hoher Qualität sein. Beispielsweise müssen die Trennkannten nicht streng rechtwinklig zur Glasbandkante verlaufen. Eine hohe Formtreue wird dann aber durch das lasergestützte Auftrennen erreicht, da die Trennlinie streng dem Pfad der hintereinander aufgereihten Filamente folgt. Demgemäß ist in einer Ausführungsform des Verfahrens vorgesehen, dass in einem Heißformprozess ein kontinuierliches Glasband hergestellt wird, wobei aus dem Glasband Glasfolien abgetrennt werden, und wobei aus den Glasfolien Glaselemente durch das Einfügen und Aneinanderreihen von filamentförmigen Schädigungen herausgetrennt werden.

Besonderer Nutzen des hierin beschriebenen Verfahrens besteht in der Anwendung gerader Trennlinien, auch sich kreuzender Trennlinien. Gekrümmte Trennlinien (Eckenradien) sind grundsätzlich aber ebenfalls denkbar.

Die Erfindung wird nachfolgend genauer anhand der beigefügten Zeichnungen näher erläutert.

### Kurzbeschreibung der Figuren

Fig. 1 zeigt eine Vorrichtung zum Auftrennen einer Glasscheibe.
Fig. 2 zeigt eine Variante der in Fig. 1 gezeigten Anordnung.
Fig. 3 zeigt eine weitere Variante der in Fig. 1 gezeigten Anordnung mit einer Transporteinrichtung für die Glasfolie.
Fig. 4 zeigt eine von einem Glasband abgetrennte Glasfolie.
In Fig. 5 ist eine Glasfolie mit zwei Pfaden von Perforationen mit unterschiedlichen Startpunkten gezeigt.
Fig. 6 zeigt eine Glasfolie mit zwei sich kreuzenden Pfaden des Laserstrahls.
Fig. 7 zeigt verschiedene Strahlprofile eines Laserstrahls.
Die Fig. 8 bis Fig. 11 zeigen weitere Ausführungsformen von Vorrichtungen zum Auftrennen von Glasfolien.

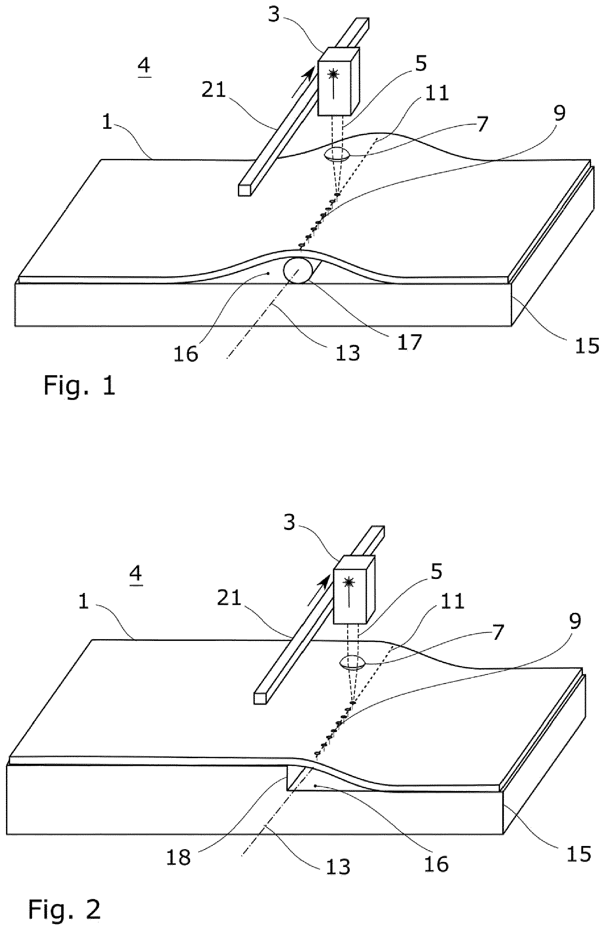

In Fig. 1 ist eine Vorrichtung 4 zur Durchführung des hier beschriebenen Verfahrens dargestellt. Allgemein, ohne Beschränkung auf das spezielle dargestellte Beispiel umfasst die Vorrichtung 4 zum Auftrennen von Glasfolien 1 mit einer Dicke von höchstens 300 µm
- einen Ultrakurzpulslaser 3 zur Bestrahlung einer Glasfolie 1 mit einem gepulsten Laserstrahl 5, wobei der Laserstrahl 5 eine Wellenlänge aufweist, für die Glas transparent ist, so dass der Laserstrahl 5 die Glasfolie 1 durchleuchten kann, sowie
- eine Fokussierungsoptik 7, um den Laserstrahl 5 zu fokussieren, wodurch die Lichtintensität des Laserstrahls 5 im Inneren der Glasfolie 1 so groß wird, dass der Laserstrahl 5 entlang seines Weges durch die Glasfolie 1 eine filamentförmige Schädigung 9 hinterlässt, und
- eine Einrichtung 21, um Laserstrahl 5 und Glasfolie 1 relativ zueinander zu bewegen, so dass die Pulse des Laserstrahls 5 nebeneinander entlang eines auf der Glasfolie 1 verlaufenden Pfades 11 filamentförmige Schädigungen 9 einfügen, sowie
- eine Einrichtung, um während des Einfügens der filamentförmigen Schädigungen 9 eine Zugspannung auf die Glasfolie 1 auszuüben, welche auf das Glas an den filamentförmigen Schädigungen 9 und in Richtung quer zum Pfad 11 der nebeneinanderliegenden filamentförmigen Schädigungen 9 wirkt, so dass die Glasfolie 1 sich während des Einfügens der filamentförmigen Schädigungen 9 entlang des Pfades 11 auftrennt.

Gemäß einer Ausführungsform kann der Ultrakurzpulslaser 3 im sogenannten Burst-Mode betrieben werden. Bei diesem Betriebsmodus wird der Laserpuls nicht als Einzelpuls abgegeben, sondern als Folge kurz hintereinander abgegebener Pulse, die gemeinsam ein Pulspaket, einen sogenannten Burst, bilden. Die Pulsfrequenz innerhalb eines Bursts ist dabei wesentlich höher als die Wiederholfrequenz der Bursts. Ein solches Pulspaket weist meist eine etwas größere Energie auf, als ein Einzelpuls im üblichen Single-Shot-Betrieb. Die Pulse eines Bursts selbst beinhalten aber deutlich weniger Energie als ein Einzelpuls. Die Energien der Pulse innerhalb eines Bursts müssen nicht konstant sein, sondern können auch ab- oder zunehmen. Ein geeigneter Laser für die Zwecke des hier beschriebenen Verfahrens ist ein Neodym-dotierter Yttrium-Aluminium-Granat-Laser, beispielsweise betrieben mit einer Wellenlänge von 1064 Nanometern. Gemäß einer Ausführungsform wird der Ultrakurzpulslaser 3 mit einer Repetitionsrate im Bereich von 1 kHz bis 1000 kHz, vorzugsweise im Bereich von 10 kHz bis 400 kHz, besonders bevorzugt im Bereich von 30 kHz bis 200 kHz betrieben werden. Die Repetitionsrate und Scangeschwindigkeit, mit welcher der Laserstrahl 5 entlang des vorgesehenen Pfads 11 über die Glasfolie 1 bewegt wird, können dabei so gewählt werden, dass der gewünschte Abstand benachbarter filamentförmiger Schädigungen 9, auch als "Pitch" bezeichnet, erreicht wird. Die geeignete Pulsdauer eines Laserpulses liegt in einem Bereich von weniger als 100 Pikosekunden , bevorzugt bei weniger als 20 Pikosekunden. Die typische mittlere Leistung des Ultrakurzpulslasers 3 liegt vorzugsweise in einem Bereich von 50 bis 500 Watt. Um die filamentförmigen Schädigungen 9 im Glas zu verursachen, wird gemäß einer vorteilhaften Weiterbildung der Erfindung eine Pulsenergie im Burst von mehr als 400 Mikrojoule eingesetzt, ferner vorteilhaft eine gesamte Burstenergie von mehr als 500 Mikrojoule.

Vorzugsweise weisen die filamentförmigen Schädigungen 9 mittlere Abstände zueinander, also einen Pitch im Bereich von 1 µm bis 10 µm, bevorzugt von 3 µm bis 8 µm auf.

Beim Betriebs des Ultrakurzpulslasers 3 im Burst-Modus ist die Repetitionsrate die Wiederholrate der Abgabe von Bursts. Die Pulsdauer ist typischerweise im Wesentlichen unabhängig davon, ob ein Laser im Einzelpulsbetrieb oder im Burst-Mode betrieben wird. Die Pulse innerhalb eines Bursts weisen somit im Allgemeinen eine ähnliche Pulslänge auf, wie ein Puls im Einzelpulsbetrieb. Die Frequenz der einzelnen Pulse innerhalb eines Bursts kann im Bereich von 15 MHz bis 90 MHz, bevorzugt im Bereich von 20 MHz bis 85 MHz liegen und beträgt beispielsweise 50 MHz. Die Anzahl der Pulse im Burst kann zwischen 2 und 10 Pulsen, z.B. 6 Pulsen liegen. Bevorzugte Repetitionsraten, also die Raten, mit der sich die Bursts wiederholen, liegen im Bereich von 50 - 500 kHz.

Vorzugsweise umfasst die Vorrichtung 4 wie im dargestellten Beispiel eine Unterlage 15, auf welcher die Glasfolie 1 aufliegt. Die Unterlage 15 kann eine Auflagefläche 16 mit einem Vorsprung aufweisen, so dass sich die Glasfolie 1 über dem Vorsprung biegt. Durch die Biegung der Glasfolie 1 über dem Vorsprung wird eine Zugspannung erzeugt.

Gemäß einer Ausführungsform umfasst die Unterlage 15 eine Auflagefläche 16, auf die ein Stab 17 aufgelegt ist, wobei der Stab 17 einen langgestreckten Vorsprung bildet, über den sich die aufgelegte Glasfolie 1 biegt.

Die Biegung der Glasfolie 1 über dem Vorsprung, wie beispielsweise dem Stab 17 ergibt eine Krümmungsachse 13, welche in Längsrichtung des Vorsprungs verläuft. Die Richtung der durch die Biegung verursachten Zugspannung an der Glasoberfläche verläuft quer, insbesondere senkrecht zur Krümmungsachse 13 und damit auch quer zur Längsachse des Vorsprungs.

Die Einrichtung 21 um Laserstrahl 5 und Glasfolie 1 relativ zueinander zu bewegen, ist in Fig. 1 durch eine Traverse symbolisiert, an welcher der Ultrakurzpulslaser 3 zusammen mit der Fokussierungsoptik 7 über die Glasfolie 1 bewegt werden. Alternativ oder zusätzlich zu einer Bewegung des Lasers 3 ist es auch möglich, die Glasfolie 1 gegenüber einem ortsfesten Laserstrahl 5 zu bewegen, um den Laserstrahl 5 entlang des vorgesehenen Pfades 11 über die Oberfläche der Glasfolie 1 zu führen. Um ein spontanes, kontrolliertes Auftrennen der Glasfolie 1 entlang des vordefinierten Pfades 11 von aneinandergereihten filamentförmigen Schädigungen 9 zu erreichen, verläuft der Pfad 11, also auch die Bewegungsrichtung des Laserstrahls 5 über die Oberfläche der Glasfolie 1 entlang der Längsrichtung des Vorsprungs, oder allgemeiner, entlang der Krümmungsachse 13 der Biegung der Glasfolie 1. Aufgrund der Biegung über dem Stab 17 liegt die Krümmungsachse 13 der Biegung auch parallel zur Längsachse des Stabs 17 oder allgemeiner des langgestreckten Vorsprungs.

Durch Einbringen der Perforation aus aneinandergereihten Filamenten entlang der durch die Biegung erzeugten Zugspannungslinie erfolgt unmittelbar ein Vereinzeln der Glasfolie 1 mit dem Perforationsprozessschritt. Ein Auftrennen kann auch dann noch erfolgen, wenn geometrische Biegelinie und Perforationslinie im Rahmen üblicher Fertigungstoleranzen voneinander abweichen. Vorzugsweise liegt die Abweichung im Bereich kleiner 1 mm, bevorzugt kleiner 0,5 mm, besonders bevorzugt kleiner 0,3 mm.

Vorteilhaft ist das Erzeugen einer definierten Biegung, was durch die Auflage auf einer entsprechend geformten Unterlage 15 sichergestellt ist. Weiterhin ist es allgemein günstig, wenn der Laserstrahl 5 weitgehend orthogonal auf das Glas auftrifft, um die Perforation bzw. das Laserfilament im Glas auszubilden. Vorzugsweise ist die Abweichung der Einfallsrichtung von der Senkrechten auf die Oberfläche kleiner als 5°.

Es wird angenommen, dass der beim Auftrennen entstehende Bruch von einer filamentförmigen Schädigung 9 zur nächsten filamentförmigen Schädigung entlang des Pfades 11 springt. Damit wird erreicht, dass der Bruch den über die Glasfolie 1 geführten Laserstrahl 5 nicht überholen kann, da der Bruch mangels eines weiteren vorausliegenden Filaments am letzten eingefügten Filament stoppt. Würde der Bruch die Reihe der sukzessive eingefügten Filamente überholen, könnte aufgrund der dann fehlenden Führung entlang der Filamente ein unkontrollierter Verlauf der Bruchkante entstehen.

Ein Parameter im Rahmen des hier beschriebenen Trennvorgangs ist die Zugspannung in der Glasfolie 1, die beispielsweise durch unterschiedliche Durchmesser unterliegender Stäbe 17 aufgeprägt wird. So kann ein Rundstab mit D = 6 mm bei einem 30 µm-dicken Glas AS87 zu einer maximalen Zugspannung von 360 MPa führen, was die üblichen Trennfestigkeiten (je nach Laser-Prozess typisch 15 - 35 MPa) um eine Größenordnung überschreitet. Durch die Ausrichtung der Laserlinie und der mechanischen Biegung in einem Schritt führt dies zu einem kontrollierten Trennvorgang bei Dünnstglas. Allgemein, ohne Beschränkung auf das dargestellte Beispiel oder auch nur des Erzeugens der Zugspannung durch Biegen ist gemäß einer Ausführungsform vorgesehen, dass auf die Glasfolie 1 im Bereich des Pfads 11 eine Zugspannung an zumindest einer Oberfläche der Glasfolie 1 erzeugt wird, die mindestens 75 MPa, vorzugsweise mindestens 150 MPa, besonders bevorzugt mindestens 250 MPa beträgt. Andererseits ist eine zu hohe Zugspannung unter Umständen nachteilig, da es zu einem Spontanbruch kommen könnte. Vorzugsweise liegt die maximale auf die Glasfolie 1 ausgeübte Zugspannung bei höchstens 750 MPa.

Die nachfolgende Tabelle listet Ausführungsbeispiele auf, mit welchen der Einfluss des Durchmessers des Stabs 17 auf die Qualität der erzeugten Trennkante in der Glasfolie 1 untersucht wurde:

| Test Nr. | Stangendurchmesser [mm] | Qualität der Bruchkante | Bemerkung |
|---|---|---|---|
| 1 | 2 | Gut | |
| 2 | 2 | Gut | |
| 3 | 2 | Schlecht | Lateraler Offset (2 mm) |
| 4 | 2 | Schlecht | Lateraler Offset (1 mm) |
| 5 | 2 | Gut | |
| 6 | 2 | Mäßig | |
| 7 | 2 | Mäßig | |
| 8 | 3 | Sehr gut | |
| 9 | 3 | Gut | |
| 10 | 3 | Gut | |
| 11 | 4 | Sehr gut | |
| 12 | 4 | Gut | |
| 13 | 6 | Gut | |
| 14 | 6 | Sehr gut | |
| 15 | 6 | Sehr gut | |
| 16 | 8 | Gut | |
| 17 | 8 | Sehr gut | |

Die Versuche wurden an Glasfolien 1 mit einer Dicke von 30 µm aus AS87-Glas durchgeführt. Optimale Kanten werden nach den in der Tabelle gelisteten Ergebnissen mit einem Stab-Durchmesser von 6 mm erzielt.

Gemäß einer alternativen oder zusätzlichen Ausführungsform wird die Glasfolie 1 über einer Stufe 18 in der Unterlage 15 gebogen, wobei die filamentförmigen Schädigungen 9 entlang eines Pfades 11 eingefügt werden, welcher entlang der Stufe 18 verläuft. Durch den Hang des Substrates an der Stufe 18 wird es mit einer definierten Zugspannung beaufschlagt. Fig. 2 zeigt eine entsprechend dieser Ausführungsform ausgebildete Variante der Vorrichtung 4 nach Fig. 1. Eine solche Anordnung kann vorteilhaft sein, um sukzessive die Glasfolie 1 in parallelen Schnitten aufzuteilen, indem die Glasfolie 1 nach einem Auftrennvorgang weiter über die Stufe 18 geschoben und dann eine weitere Auftrennung vorgenommen wird.

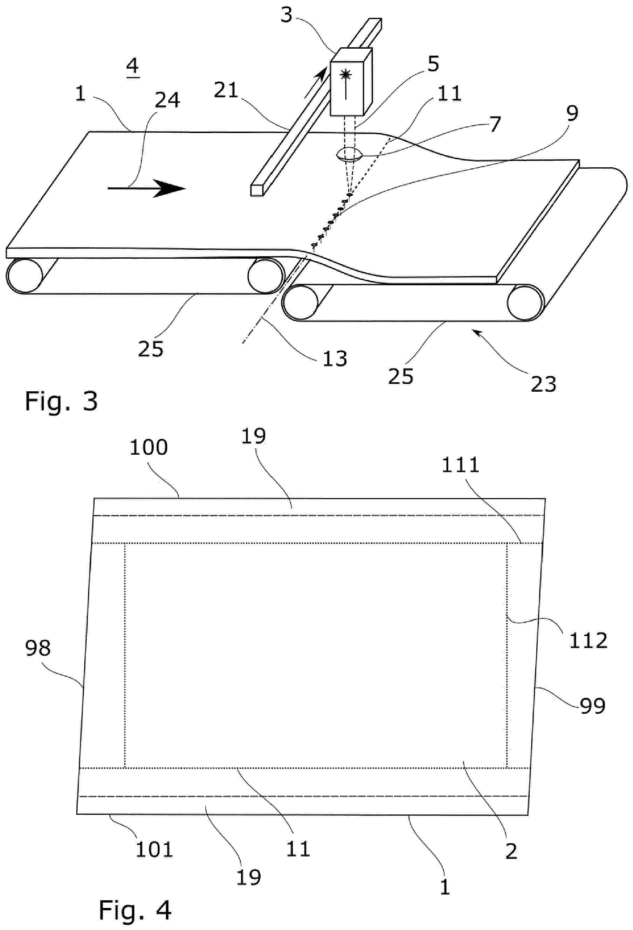

Fig. 3 zeigt eine weitere Variante der in Fig. 1 gezeigten Anordnung mit einer Vorschub- oder Transporteinrichtung 23, mit welcher die Glasfolie 1 bewegt wird. Das Prinzip dieser Ausführungsform basiert darauf, dass die Transporteinrichtung 23 so ausgebildet ist, dass die Glasfolie 1 auf der Transporteinrichtung 23 gebogen wird, wobei die Krümmungsachse 13 der Biegung der Glasfolie 1 quer, insbesondere senkrecht zur Vorschubrichtung 24 der Transporteinrichtung 23 liegt. Die Biegung der Glasfolie 1 wird insbesondere durch die Anordnung und Ausbildung der verschiedenen Transportelemente erreicht. Das in Fig. 3 gezeigten Beispiel weist als Transportelemente zwei Transportbänder 25 auf. Diese sind in verschiedenen Ebenen angeordnet, so dass sich ähnlich wie bei der in Fig. 2 gezeigten Ausführungsform eine Stufe bildet, über welche die Glasfolie 1 läuft.

Fig. 4 illustriert einen typischen Anwendungsfall des Verfahrens. Das Verfahren, beziehungsweise die Vorrichtung 4 zur Durchführung des Verfahrens können verwendet werden, um aus Glasfolien 1 Glaselemente 2 herauszutrennen. Dabei weist die Glasfolie 1 Borten 19 auf, die sich als verdickte Randbereiche an zwei gegenüberliegenden Seiten darstellen. Derartige Glasfolien 1 werden erhalten, wenn diese als Abschnitte von einem Glasband abgetrennt werden, wobei das Glasband in einem kontinuierlichen Heißformprozess hergestellt wird. In einer bevorzugten Ausführungsform wird das Glasband in einem Down-Draw-Verfahren hergestellt, bei welchem das Glasband von einer nach unten geöffneten Düse abgezogen wird. Die Borten 19 entstehen dabei dadurch, dass das noch heiße, weiche Glas nach dem Abziehen von der Düse tendiert, sich wieder zusammenzuziehen. Dieses Zusammenziehen erfolgt vor allem am Rand des Glasbands. Durch die Borten 19 weist die Glasfolie 1 beim Biegen mit einer die Borten 19 kreuzenden Krümmungsachse 13 eine höhere Steifigkeit auf, als bei einer Biegung mit einer parallel zur Längsrichtung der Borten 19 liegenden Krümmungsachse.

Das Verfahren kann hier insbesondere dazu dienen, in Form und Abmessung genau bestimmte Glaselemente 2 herzustellen. Wie in Fig. 4 zu erkennen, sind die Kanten 98, 99 der Glasfolie 1, welche die Borten 19 kreuzen, nicht exakt rechtwinklig zu den Kanten 100, 101 mit den Borten. Derartige Glasfolien 1 können insbesondere erhalten werden, wenn von einem kontinuierlichen Glasband die Glasfolien 1 abgetrennt werden, indem nur am Rand des Glasbands kurze Anrisse eingefügt werden. Die Kanten 98, 99 werden dann durch an den Anrissen ausgehende Brüche des Glasbands erzeugt, die dadurch nicht notwendig perfekt rechtwinklig zu den beiden Längskanten des Glasbands verlaufen. Andererseits erlaubt diese Vorschnitt-Verfahren einen schnellen Grob-Zuschnitt und damit eine hohe Vorschubgeschwindigkeit des Glasbands. Ohne Beschränkung auf die hier beschriebenen Beispiele ist daher in einer Ausführungsform des Verfahrens vorgesehen, dass in einem Heißformprozess ein kontinuierliches Glasband hergestellt wird, wobei aus dem Glasband die Glasfolien 1 abgetrennt werden, indem am Rand des Glasbands Anrisse eingefügt werden und wobei die Glasfolien 1 durch von den Anrissen ausgehende und das Glasband quer durchtrennende Brüche abgeteilt werden. Anschließend können dann wie beschrieben aus den Glasfolien 1 Glaselemente 2 durch das Einfügen und Aneinanderreihen von filamentförmigen Schädigungen 9 entlang eines oder mehrere vorbestimmter Pfade 11 herausgetrennt werden.

Bei dem in Fig. 4 gezeigten Beispiel gliedert sich der innerhalb der Außenkontur der Glasfolie 1 verlaufende Pfad 11 in kleinere Pfade oder Abschnitte 111, 112 auf. Der Pfad 11 umschließt insgesamt die Kontur eines aus der Glasfolie 1 herauszulösenden Glaselements 2. Um das Biegen der Glasfolie 1 zur Erzeugung der Zugspannung für das Auftrennen während des Perforierens mit dem Laserstrahl 5 zu erleichtern, ist es allgemein vorteilhaft, wenn die Glasfolie 1 erst an entlang der Borten 19 verlaufenden Abschnitten 111 und danach entlang von quer zu den Borten 19 verlaufenden Abschnitten 112 des Pfads 11 aufgetrennt wird. Die Glasfolie 1 kann nämlich leicht über einem parallel zu den Borten 19 verlaufenden Vorsprung gebogen werden, während bei einem die Borten 19 kreuzenden Vorsprung auch die sehr steifen Borten 19 mit gebogen werden müssten. Vorzugsweise werden die entlang der Borten 19 verlaufenden Abschnitte 111 über zumindest eine der Kanten 98, 99 der Glasfolie 1 geführt. Im dargestellten Beispiel verlaufen die beiden Abschnitte 111 sogar über beide Querkanten 98, 99 der Glasfolie 1. Sind die Borten 19 abgetrennt, lässt sich die Glasfolie 1 dann auch in der dazu senkrechten Richtung leicht biegen. Ohne Beschränkung auf das dargestellte Beispiel ist gemäß einer Ausführungsform daher allgemein vorgesehen, dass eine Glasfolie 1 bereitgestellt wird, welche zwei gegenüberliegende Kanten 100, 101 aufweist, welche Borten 19 in Form sich entlang dieser Kanten 100, 101 erstreckender verdickter Bereiche aufweist, wobei die Glasfolie 1 erst entlang zweier Pfade 111 aufgetrennt wird, welche sich in Richtung der Kanten 100, 101 mit den Borten 19 erstrecken, und wobei dann die Glasfolie 1 entlang zumindest eines weiteren Pfades 112 aufgetrennt wird, welcher quer zu den beiden Pfaden 111 in Richtung der Kanten 98, 99 verläuft. Vorzugsweise erfolgt die Auftrennung dabei auch wie dargestellt entlang zweier quer zu den Kanten 100, 101 mit den Borten 19 verlaufenden Pfaden 112. Die Pfade 111 in Richtung der Kanten 100, 101 mit den Borten 19 verlaufen dabei vorzugsweise parallel zu diesen Kanten 100, 101. Je nach gewünschter Form des so herausgearbeiteten Glaselements 2 können diese Pfade 111 aber auch einen gewissen Winkel zu den Kanten 98, 99 aufweisen. In diesem Fall kreuzen die Pfade 112 oder deren Verlängerungen aber vorzugsweise die Borten 19 nicht, um zu vermeiden, dass die Borten 19 zur Erzeugung der Zugspannung mit gebogen werden müssten. Ebenso verlaufen die quer zu den Kanten 100, 101 mit den Borten 19 verlaufenden Pfade 112 wie in Fig. 4 gezeigt senkrecht zu den Kanten 100, 101. Mit einmal parallel und einmal senkrecht verlaufenden Pfaden 111, beziehungsweise 112 wird auf diese Weise ein rechteckiges Glaselement 2 aus der Glasfolie 1 herausgetrennt.

Für eine stabile Prozessführung ist es generell von Vorteil, wenn die Zugspannung an Schnittkanten der Glasfolie 1, wie etwa einem Glasband-Abschnitt mit Borten 19 die dort vorhandene Kantenfestigkeit nicht überschreitet, damit kein unkontrollierter Bruch eintritt. Die Kantenfestigkeit kann durch Bruchversuche an gleichartig hergestellten Proben ermittelt werden. Als Kantenfestigkeit kann dabei der Mittelwert der Zugspannungen angesetzt werden, bei welcher die Proben brechen. Allgemein, ohne Beschränkung auf die in den Figuren dargestellten Beispiele ist daher vorgesehen, dass die Glasfolie 1 einer Zugspannung ausgesetzt wird, die geringer ist, als der Mittelwert der Zugspannung, also der mittleren Bruchspannung, unter welcher die Glasfolie 1 an einer Kante reißt. Vorzugsweise überschreitet die ausgeübte Zugspannung auch nicht einen Wert in der Größe von 2/3, besonders bevorzugt der Hälfte der mittleren Bruchspannung.

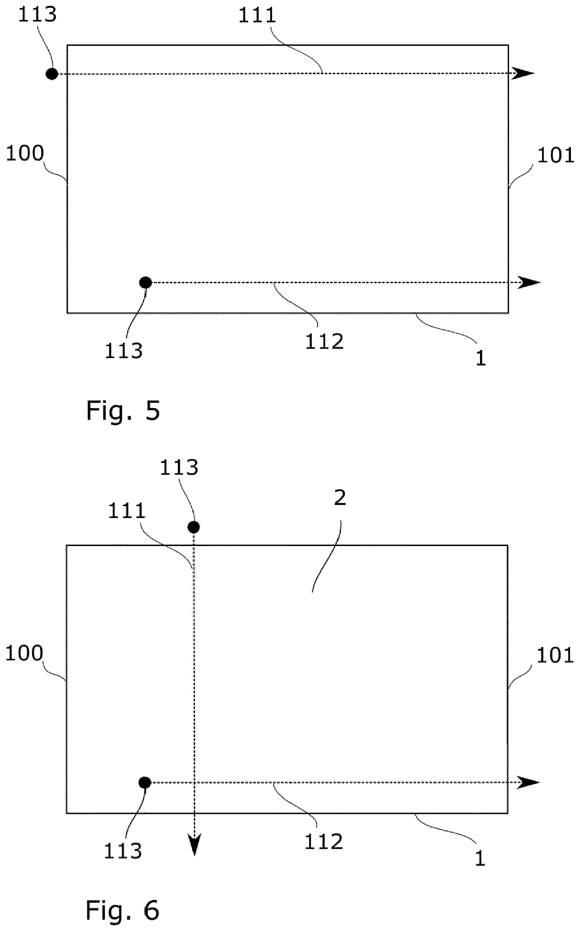

In der Prozessführung mit dem Ultrakurzpuls-Laser 3 können insbesondere zwei Ausprägungen des Verfahrens vorliegen. Diese Verfahrensvarianten werden anhand von Fig. 5 näher erläutert. In Fig. 5 ist eine Glasfolie 1 mit zwei Pfaden 111, 112 von Perforationen, also Aneinanderreihungen filamentförmiger Schädigungen 9 gezeigt. Die beiden Pfade 111, 112 unterscheiden sich hinsichtlich ihrer Startpunkte 113. Gemäß einer Ausführungsform des Verfahrens kreuzt der Pfad des Laserstrahls zwei gegenüberliegende Kanten 100, 101 der Glasfolie 1. Die Perforation (Laserlinie, beziehungsweise Pfad 11) wird also durchgehend über die Kanten der Glasfolie 1 eingebracht, also mit einem Vor- und einem Nachlauf. Gegebenenfalls können aber je nach Schneidverfahren an der Kante des Rohglassheets beziehungsweise der Glasfolie 1 die Spannungen unkontrolliert sein, so dass der Bruch undefiniert startet. Diese im Beispiel des Pfads 111 realisierte durchgehende Perforation ist aber günstig, um eine durchgehende gut definierte Trennkante zu erzeugen.

Eine weitere Möglichkeit ist die mit dem Pfad 112 realisierte aufgesetzte Perforation. Hier liegt der Startpunkt 113 des Pfads 112 des Laserstrahls 5 auf der Glasfolie 1 und hat damit einen Abstand zu allen Kanten der Glasfolie 1. Die Perforation (Laserlinie, beziehungsweise Pfad 11) wird also zu Beginn innerhalb der Glasfolie 1 gestartet und vorzugsweise nur mit einem entsprechenden Nachlauf gefahren. Der dabei nicht perforierte erste Abschnitt trennt sich dann überraschend im Allgemeinen automatisch und kontrolliert aufgrund des im restlichen Bereich einsetzenden Bruchmechanismus unter der Zugspannung. Gemäß einer Ausführungsform beträgt der Abstand zur nächstgelegenen Kante 1 - 2 mm. Vorzugsweise wird der Laserstrahl 5 dann am Ende über eine der Kanten der Glasfolie 1 geführt, so dass der Pfad 112 des Laserstrahls dementsprechend eine der Kanten, hier die Kante 101 kreuzt.

Beide Ausführungsformen können auch kombiniert werden, insbesondere können beide Formen von Pfaden 111, 112 eingefügt werden. So kann ein erster, nicht durchgehender Schnitt mit einem aufgesetzten Startpunkt 113 eingefügt werden. Ein zweiter, zwei gegenüberliegende Kanten kreuzender Pfad kann dann den nicht durchgehenden Schnitt, beziehungsweise Pfad kreuzen und damit ein Glaselement 2 abtrennen. Diese Ausführungsform ist in Fig. 6 gezeigt. In diesem Fall ist also auch nicht erforderlich, dass die Glasfolie 1 zwischen dem Startpunkt 113 des Pfades 112 und der Kante 100 spontan bricht.

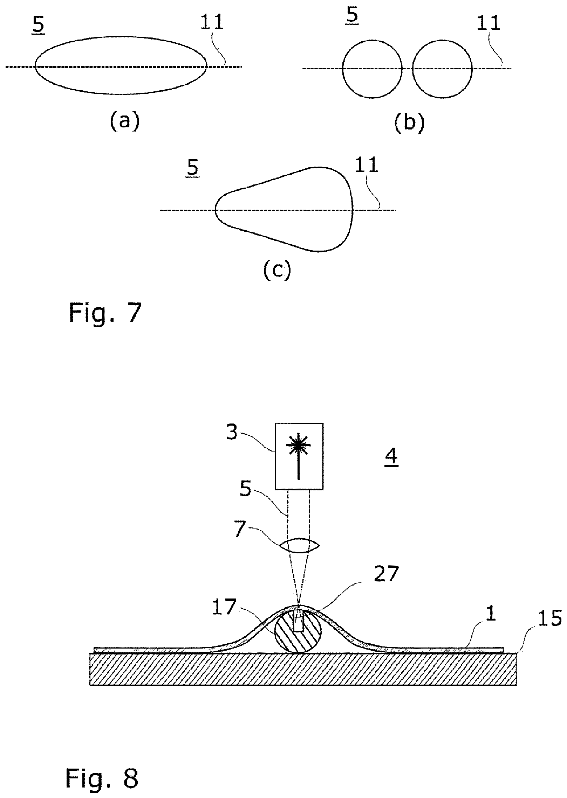

Die Trennbarkeit der Glasfolie 1 und damit die aufzuwendende Zugspannung können durch mehrere Parameter, wie etwa den Pitch, also den gegenseitigen Abstand der filamentförmigen Schädigungen 9 beeinflusst werden. Eine Möglichkeit, um die Zugspannung herabzusetzen, ist die Einstellung eines bestimmten Strahlprofils des Laserstrahls 5. Gemäß einer Ausführungsform wird dazu eine Fokussierungsoptik 7 vorgesehen, welche ein Strahlprofil des Laserstrahls 5 in der Glasfolie 1 erzeugt, welches in Richtung entlang des Pfads 11 ausgedehnter ist, als in Richtung senkrecht zum Pfad 11. Indem die Glasfolie 1 mit einem Laserstrahl 5 mit einem solchen Strahlprofil bestrahlt wird, können Vorzugsrichtungen von Mikrorissen erzeugt werden, welche die Trennbarkeit erleichtern, beziehungsweise ein Auftrennen bei einer niedrigeren Zugspannung ermöglichen. Fig. 7 zeigt ohne Beschränkung der Allgemeinheit Beispiele verschiedener Strahlprofile des Laserstrahls 5, welche wie oben beschrieben in Richtung des Pfads 11 ausgedehnter sind, als senkrecht dazu. Teilbild (a) zeigt einen Laserstrahl 5 mit einem elliptischen Strahlprofil, dessen lange Halbachse in Richtung des Pfads 11 ausgerichtet ist. Bei dem Strahlprofil nach Teilbild (b) ist das Strahlprofil in zwei getrennte Spots aufgespalten, wobei die beiden Spots in Richtung entlang des Pfads 11 beabstandet sind. Durch diesen Abstand ist das Strahlprofil ebenso in Richtung des Pfades 11 ausgedehnter als senkrecht dazu. Es ist auch möglich, ein in Bezug auf eine Spiegelachse senkrecht zum Pfad 11 asymmetrisches Strahlprofil vorzusehen. Ein Beispiel dazu zeigt Teilbild (c). Das Strahlprofil hat die Form eines entlang des Pfades 11 langgestreckten Tropfens. Langgestreckte Strahlprofile, wie sie beispielhaft Fig. 7 zeigt, können besonders auch bei nicht geradlinigen Pfaden 11 das Auftrennen erleichtern.

Die Fig. 8 bis Fig. 10 zeigen weitere Ausführungsformen von Vorrichtungen 4 zum Auftrennen von Glasfolien 1. Fig. 8 ist eine Variante des in Fig. 1 gezeigten Beispiels. Fig. 8 ist ein Beispiel einer Ausführungsform, bei welcher eine Unterlage 15 mit einem langgestreckten Vorsprung vorgesehen wird, wobei der Vorsprung eine Unterbrechung im Bereich des Auftrefforts des Laserstrahls 5 aufweist, so dass die auf der Unterlage 15 aufliegende Glasfolie 1 am Auftreffort des Laserstrahls 5 frei liegt. Bei dem Beispiel der Fig. 8 ist die Unterbrechung durch eine Nut 27 im Stab 17 realisiert. Die Glasfolie 1 überspannt diese Nut 27. Auf diese Weise trifft der Laserstrahl 5 nach dem Durchqueren der Glasfolie 1 nicht direkt auf den Stab 17. Damit wird eine Beschädigung des Stabs 17 vermieden.

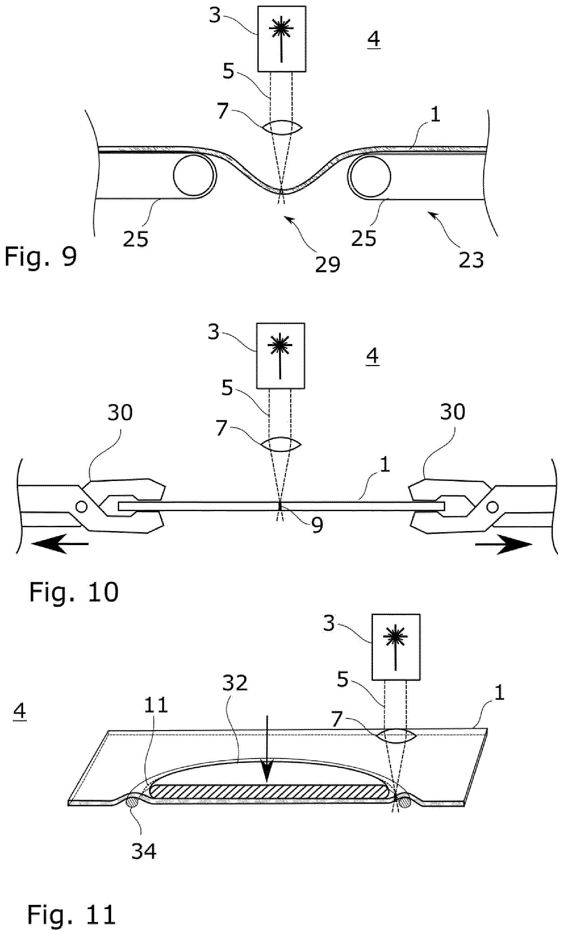

Bei den bisher dargestellten Ausführungsbeispielen wurde durch die Biegung der Glasfolie 1 die Zugspannung auf der dem Ultrakurzpulslaser 3, beziehungsweise der Einfallsrichtung des Laserstrahls 5 zugewandten Seite der Glasfolie 1 erzeugt. Es ist aber auch allgemein möglich, die Glasfolie 1 so zu biegen, dass eine Zugspannung auf der dem Ultrakurzpulslaser 3 abgewandten Seite der Glasfolie 1 erzeugt wird. Fig. 9 zeigt dazu ein Beispiel. Allgemein, ohne Beschränkung auf das dargestellte Beispiel ist in einer Ausführungsform vorgesehen, dass die dem Ultrakurzpulslaser 3 zugewandte Seite der Glasfolie 1 konkav gebogen wird. Um dies zu erreichen, kann weiterhin allgemein eine Unterlage mit einem Spalt 29 vorgesehen werden, wobei die Glasfolie 1 sich in den Spalt 29 hinein wölbt. Bei dem dargestellten Beispiel ist eine Unterlage in Form einer Transport- oder Vorschubeinrichtung 23 mit zwei durch einen Spalt 29 getrennten Transportbändern 25 vorgesehen. Die Glasfolie 1 hängt dabei über dem Spalt 29 durch und wölbt sich dadurch in diesen hinein. Ein Vorteil dieser Ausführungsform besteht darin, dass sich die Zugspannung bei einem durch das Eigengewicht bewirkten Durchhängen der Glasfolie 1 über einen breiten Bereich der abgewandten Seite der Glasfolie 1 verteilt, so dass die Anordnung wenig empfindlich auf die Lage des Pfads 11, beziehungsweise auf den Auftreffpunkt des Laserstrahls 5 ist. Damit lassen sich in einfacher Weise auch nicht geradlinige Pfade, beziehungsweise Trennkanten realisieren. Durch gegenläufiges Bewegen der Transportbänder 25 oder allgemeiner der Bewegungseinrichtungen 21 besteht hier auch die Möglichkeit, den Biegeradius der Glasfolie 1 und damit die Zugspannung einzustellen. Allerdings ändert sich in diesem Fall auch die vertikale Lage der Glasfolie 1 in Bezug auf den Laserstrahl 5.

Bei den bisher anhand der Figuren beschriebenen Ausführungsformen wurde die Zugspannung auf zumindest eine Oberfläche der Glasfolie 1 durch Biegen der Glasfolie 1 erzeugt. Beim Biegen entsteht dann auf der konvex gebogenen Seite eine Zugspannung, während auf der gegenüberliegenden, konkav gebogenen Seite eine Druckspannung hervorgerufen wird. Es ist aber auch möglich, an der Glasfolie 1 zu ziehen, um eine Zugspannung zu erzeugen. Diese liegt dann an beiden gegenüberliegenden Seiten an. Es ist dem Fachmann ersichtlich, dass das Ziehen an der Glasfolie 1 zweckmäßig in Richtung quer, vorzugsweise senkrecht zum Pfad der Filamente erfolgt.

Fig. 10 zeigt eine Vorrichtung zur Durchführung dieser Ausführungsform. Es ist eine Zugvorrichtung 30 (in der Figur symbolisiert durch zwei Greifzangen) vorgesehen, welche an der Glasfolie 1 quer zum Pfad 11 zieht, so dass an beiden gegenüberliegenden Oberflächen der Glasfolie 1 eine Zugspannung hervorgerufen wird.

Fig. 11 zeigt in aufgeschnittener perspektivischer Ansicht noch eine Variante einer Vorrichtung 4 zum Auftrennen von Glasfolien 1. Mit dieser Vorrichtung 4 kann die Glasfolie 4 entlang eines nicht geradlinigen Pfades 11 aufgetrennt werden. Generell basiert diese Vorrichtung darauf, einen Stempel und einen Vorsprung zu verwenden, wobei Stempel und Vorsprung zueinander versetzt sind und zusammengeführt werden, wobei die Glasfolie 1 zwischen diesen zusammengeführten Elementen gebogen wird. Im dargestellten Beispiel ist der Stempel 32 tellerförmig und der Vorsprung ein Ring 34. Damit wird eine ringförmige Zugspannungszone erzeugt, wobei die Zugspannung in radialer Richtung entlang der Glasoberfläche wirkt. Auf diese Weise kann die Glasfolie 1 entlang eines allgemein ringförmigen, beispielsweise wie dargestellt entlang eines kreisförmigen Pfads 11 aufgetrennt werden. Es ist dem Fachmann ersichtlich, dass das Verfahren und die Vorrichtung nicht auf die hier beschriebenen speziellen Ausführungsbeispiele beschränkt ist, sondern dass diese im Rahmen des Gegenstands der nachfolgenden Ansprüche abgeändert werden können. Insbesondere können auch verschiedene Ausführungsbeispiele miteinander kombiniert werden. So kann beispielsweise eine Transporteinrichtung 23, wie sie Fig. 3 vorsieht, auch im Beispiel der Fig. 1 vorgesehen sein. Der Stab 17 kann dabei generell auch eine passiv oder aktiv drehbare Walze sein. Auch das Beispiel mit dem Stempel 32 und dem ringförmigen Vorsprung zur Erzeugung nicht geradliniger Konturen von Glaselementen 2 ist beispielhaft. Hier sind ebenfalls andere Möglichkeiten, wie etwa das Anlegen eines Unterdrucks zur Erzeugung einer entlang zumindest einer Glasoberfläche wirkenden Zugspannung möglich.

**Bezugszeichensliste**

| | |
|---|---|
| 1 | Glasfolie |
| 2 | Glaselement |
| 3 | Ultrakurzpulslaser |
| 4 | Vorrichtung zum Auftrennen von Glasfolien |
| 5 | Laserstrahl |
| 7 | Fokussierungsoptik |
| 9 | filamentförmige Schädigung |
| 11, 111, 112 | Pfad |
| 13 | Krümmungsachse |
| 15 | Unterlage |
| 16 | Auflagefläche |
| 17 | Stab |
| 18 | Stufe |
| 19 | Borte |
| 21 | Bewegungseinrichtung |
| 23 | Transporteinrichtung |
| 24 | Vorschubrichtung |
| 25 | Transportband |
| 27 | Nut |
| 29 | Spalt |
| 30 | Greifeinrichtung |
| 32 | Stempel |
| 34 | Ring |
| 98, 99, 100, 101 | Kanten der Glasfolie |
| 113 | Startpunkt des Pfads 11, 111, 112 |

## Patentansprüche

1. Verfahren zum Auftrennen von Glasfolien, bei welchem
- eine Glasfolie (1) mit einer Dicke von höchstens 300 µm bereitgestellt, und
- die Glasfolie (1) mit einem gepulsten Laserstrahl (5) eines Ultrakurzpulslasers (3) bestrahlt wird, wobei
- die Lichtintensität des Laserstrahls (5) im Inneren der Glasfolie (1) so groß ist, dass der Laserstrahl (5) entlang seines Weges durch die Glasfolie (1) eine filamentförmige Schädigung (9) hinterlässt, und wobei
- der Laserstrahl (5) und die Glasfolie (1) relativ zueinander bewegt werden, so dass durch die Pulse des Laserstrahls (5) nebeneinander entlang eines auf der Glasfolie (1) verlaufenden Pfades (11) filamentförmige Schädigungen (9) eingefügt werden, und wobei
- während des Einfügens der filamentförmigen Schädigungen (9) eine Zugspannung zumindest auf eine Oberfläche der Glasfolie (1) ausgeübt wird, welche auf das Glas an den filamentförmigen Schädigungen (9) und bevorzugt in Richtung quer zum Pfad (11) der nebeneinanderliegenden filamentförmigen Schädigungen (9) wirkt, so dass
- die Glasfolie (1) sich während des Einfügens der filamentförmigen Schädigungen (9) entlang des Pfades (11) auftrennt.

2. Verfahren gemäß dem vorstehenden Anspruch, **dadurch gekennzeichnet, dass** der beim Auftrennen entstehende Bruch von einer filamentförmiger Schädigung (9) zur nächsten filamentförmigen Schädigung (9) entlang des Pfades (11) springt.

3. Verfahren gemäß einem der vorstehenden Ansprüche, **dadurch gekennzeichnet, dass** die Glasfolie (1) zur Erzeugung einer quer zum Pfad (11) gerichteten Zugspannung gebogen wird.

4. Verfahren gemäß dem vorstehenden Anspruch, **gekennzeichnet durch** zumindest eines der folgenden Merkmale:
- die Glasfolie (1) wird auf einer Unterlage (15) mit einem Vorsprung aufgelegt, so dass sich die Glasfolie (1) über dem Vorsprung biegt,
- es wird eine Unterlage (15) mit einer Auflagefläche (16) bereitgestellt, auf die ein Stab (17) aufgelegt wird, wobei der Stab (17) einen langgestreckten Vorsprung bildet, über den sich die aufgelegte Glasfolie (1) biegt,
- die Glasfolie (1) wird über einer Stufe (18) in einer Unterlage (15) gebogen, auf welcher die Glasfolie (1) aufgelegt wird, wobei die filamentförmigen Schädigungen (9) entlang eines Pfades (11) eingefügt werden, welcher entlang der Stufe (18) verläuft,
- die Glasfolie 1 wird mittels einer Transporteinrichtung (23) bewegt, wobei die Transporteinrichtung (23) so ausgebildet ist, dass die Glasfolie (1) auf der Transporteinrichtung (23) gebogen wird, wobei die Krümmungsachse (13) der Biegung der Glasfolie (1) quer, insbesondere senkrecht zur Vorschubrichtung (24) der Transporteinrichtung (23) liegt.

5. Verfahren gemäß einem der vorstehenden Ansprüche, **dadurch gekennzeichnet, dass** in einem Heißformprozess ein kontinuierliches Glasband hergestellt wird, wobei aus dem Glasband Glasfolien (1) abgetrennt werden, und wobei aus den Glasfolien (1) Glaselemente (2) durch das Einfügen und Aneinanderreihen von filamentförmigen Schädigungen (9) herausgetrennt werden.

6. Verfahren gemäß einem der vorstehenden Ansprüche, **gekennzeichnet durch** zumindest eines der folgenden Merkmale:
- auf die Glasfolie (1) im Bereich des Pfads (11) wird eine Zugspannung an zumindest einer Oberfläche der Glasfolie erzeugt, die mindestens 75 Mpa, vorzugsweise mindestens 150 MPa, besonders bevorzugt mindestens 250 Mpa beträgt,
- die maximale auf die Glasfolie 1 ausgeübte Zugspannung liegt bei höchstens 750 MPa,
- die ausgeübte Zugspannung beträgt höchstens 2/3, besonders bevorzugt die Hälfte der mittleren Bruchspannung der Glasfolie (1) an ihrer Kante
- mit einer Zugvorrichtung (30) wird an der Glasfolie (1) quer zum Pfad (11) gezogen, so dass an beiden gegenüberliegenden Oberflächen der Glasfolie (1) eine Zugspannung hervorgerufen wird.

7. Verfahren gemäß einem der vorstehenden Ansprüche, **gekennzeichnet durch** eines der folgenden Merkmale:
- der Pfad (111) des Laserstrahls (5) kreuzt zwei gegenüberliegende Kanten (100, 101) der Glasfolie (1).
- der Startpunkt (113) des Pfads (112) des Laserstrahls liegt auf der Glasfolie (1), so dass der Startpunkt einen Abstand zu allen Kanten der Glasfolie (1) hat,
- die Glasfolie wird mit einem Laserstrahl (5) bestrahlt, dessen Strahlprofil in der Glasfolie (1) in Richtung entlang des Pfads (11) ausgedehnter ist, als in Richtung senkrecht zum Pfad (11).

8. Verfahren gemäß einem der vorstehenden Ansprüche, **dadurch gekennzeichnet, dass** eine Glasfolie (1) bereitgestellt wird, welche zwei gegenüberliegende Kanten (100, 101) aufweist, welche Borten (19) in Form sich entlang dieser Kanten (100, 101) erstreckender verdickter Bereiche aufweisen, wobei die Glasfolie (1) erst entlang zweier Pfade (111) aufgetrennt wird, welche sich in Richtung der Kanten (100, 101) mit den Borten (19) erstrecken, und wobei dann die Glasfolie (1) entlang zumindest eines weiteren, Pfades (112) aufgetrennt wird, welcher quer zu den beiden Pfaden (111) in Richtung der Kanten verläuft.

9. Vorrichtung zum Auftrennen von Glasfolien mit einer Dicke von höchstens 300 µm, umfassend
- einen Ultrakurzpulslaser (3) zur Bestrahlung einer Glasfolie (1) mit einem gepulsten Laserstrahl (5), wobei der Laserstrahl (5) eine Wellenlänge aufweist, für die Glas transparent ist, so dass der Laserstrahl (5) die Glasfolie (1) durchleuchten kann, sowie
- eine Fokussierungsoptik (7), um den Laserstrahl (5) zu fokussieren, wodurch die Lichtintensität des Laserstrahls (5) im Inneren der Glasfolie (1) so groß wird, dass der Laserstrahl (5) entlang seines Weges durch die Glasfolie (1) eine filamentförmige Schädigung (9) hinterlässt, und
- eine Einrichtung (21), um Laserstrahl (5) und Glasfolie (1) relativ zueinander zu bewegen, so dass die Pulse des Laserstrahls (5) nebeneinander entlang eines auf der Glasfolie (1) verlaufenden Pfades (11) filamentförmige Schädigungen (9) einfügen, sowie
- eine Einrichtung, um während des Einfügens der filamentförmigen Schädigungen (9) eine Zugspannung auf die Glasfolie (1) auszuüben, welche auf das Glas an den filamentförmigen Schädigungen (9) und in Richtung quer zum Pfad (11) der nebeneinanderliegenden filamentförmigen Schädigungen (9) wirkt, so dass die Glasfolie (1) sich während des Einfügens der filamentförmigen Schädigungen (9) entlang des Pfades (11) auftrennt.

10. Vorrichtung (4) gemäß dem vorstehenden Anspruch, **gekennzeichnet durch** zumindest eines der folgenden Merkmale:
- die Vorrichtung (4) umfasst eine Unterlage (15) mit einem Vorsprung, so dass sich eine aufgelegte Glasfolie (1) über dem Vorsprung biegt,
- die Vorrichtung (4) umfasst eine Unterlage (15) mit einer Stufe (18) über welcher sich eine aufgelegte Glasfolie (1) biegt,
- die Vorrichtung (4) umfasst eine Vorschubeinrichtung (23), wobei die Vorschubeinrichtung (23) so ausgebildet ist, dass die Glasfolie (1) auf der Vorschubeinrichtung (23) gebogen wird, so dass die Krümmungsachse (13) der Biegung der Glasfolie (1) quer, insbesondere senkrecht zur Vorschubrichtung (24) der Vorschubeinrichtung (23) liegt,
- es ist eine Zugvorrichtung (30) vorgesehen, welche an der Glasfolie (1) quer zum Pfad (11) zieht, so dass an beiden gegenüberliegenden Oberflächen der Glasfolie (1) eine Zugspannung hervorgerufen wird.

11. Vorrichtung (4) gemäß einem der zwei vorstehenden Ansprüche, **gekennzeichnet durch** eine Fokussierungsoptik (7), welche ein Strahlprofil des Laserstrahls (5) in der Glasfolie (1) erzeugt, welches in Richtung entlang des Pfads (11) ausgedehnter ist, als in Richtung senkrecht zum Pfad (11).
